# EUROPEAN PATENT APPLICATION

(11) **EP 3 779 128 A1**
(43) Date of publication of application: **17.02.2021**
(21) Application number: 19191489.4
(22) Date of filing: 13.08.2019
(51) Int. Cl.: F01D 25/12, F02C 7/12

(54) **COOLING SYSTEM FOR COOLING AIR OF A SECONDARY AIR SYSTEM OF A GAS TURBINE ENGINE**

(71) Applicant: Rolls-Royce Deutschland Ltd & Co KG, 15827 Blankenfelde-Mahlow (DE)
(72) Inventor: DIAZ, Carlos, 15827 Blankenfelde-Mahlow (DE)
(74) Representative: Müller, Wolfram Hubertus

(57) **Abstract**

The invention regards a cooling system for cooling air of a secondary air system of a gas turbine engine (100). The system comprises at least one heat pipe (3) which has an evaporator section (31) and a condenser section (32), a heat transfer interface (4) in which the evaporator section (31) of the at least one heat pipe (3) is thermally coupled with air to be cooled, and a heat sink (5) to which the condenser section (32) of the at least one heat pipe (3) is thermally coupled. Further aspects of the invention regard an aircraft comprising a gas turbine engine with such cooling system and a method for cooling air of a secondary air system of a gas turbine engine of an aircraft.

## Description

The present disclosure relates to a cooling system for cooling air of a secondary air system of a gas turbine engine, an aircraft with a gas turbine engine having such cooling system and a method for cooling air of a secondary air system of a gas turbine engine of an aircraft.

Efficient thermal management for engine components is essential in a gas turbine engine. To ensure that the material temperature of an engine component such as a turbine section remains below a defined limit, the component is cooled, i.e., part of the heat is extracted from the component with the aid of a cooler medium. Typically, air is used as such cooler medium that is extracted from the compressor. In order to direct the cooling air flow to the components to be cooled, the engine is equipped with an internal air system referred to as secondary air system.

To increase the efficiency of cooling, it is further known to cool the cooling air from the secondary air system by means of a heat exchanger. Such cooling system is described in document US 2014/0352315 A1 in which a heat exchanger is provided which cools the compressor discharge air by exchanging heat from the compressor discharge air to a cooling fluid, wherein the cooling fluid is cooled in an additional separated heat sink.

The problem underlying the present invention is to provide for a cooling system, aircraft and method which provide for efficient cooling of cooling air of a secondary air system.

This problem is solved by a cooling system with the features of claim 1, an aircraft with the features of claim 12 and a method with the features of claim 13. Embodiments of the invention are identified in the dependent claims.

According to an aspect of the invention, a cooling system for cooling air of a secondary air system of a gas turbine engine is provided. The cooling system comprises at least one heat pipe, wherein the heat pipe has an evaporator section and a condenser section. It is further provided a heat transfer interface in which the evaporator section of the at least one heat pipe is thermally coupled with air to be cooled, and a heat sink to which the condenser section of the at least one heat pipe is thermally coupled.

Accordingly, aspects of the present invention are based on the idea to cool air of a secondary air system by means of at least one heat pipe, wherein the evaporator section of the heat pipe is thermally coupled to the air flowing in the secondary air system, thereby cooling the air. Such cooling system is associated with a plurality of advantages. Heat pipes are highly efficient heat transfer devices that absorb and release heat on the basis of a phase change of a working fluid in the heat pipes, thereby allowing for an efficient cooling of air. At the same time, the cooling system using heat pipes for cooling is completely passive, i.e., does not require active elements such as pumps and, therefore, has a high reliability. Further, heat pipes - different than air to air or air to liquid heat exchangers - do not provide for a substantial drag and pressure drop in the secondary air system, thereby requiring less air for cooling. A further advantage lies in the fact that heat pipes are working at constant temperature in cold and hot sinks, such that it is possible to regulate passively at which temperatures a heat transfer is possible.

The evaporator section of the heat pipe absorbs energy required for evaporation of the working fluid of the heat pipe and, accordingly, cools an adjacent medium. The condenser section of the heat pipe dissipates energy that is released by condensation of the working fluid vapor and, accordingly, heats an adjacent medium.

The present invention is not limited to any particular kind of heat pipe. Any known form of heat pipe may be implemented. If the heat pipe is in the form of a pipe, the evaporator section and the condenser section are typically located at opposing ends of the pipe. A heat pipe in the sense of the present disclosure can also be a loop heat pipe in which a vapor line and a liquid line of the heat pipe are separated and form a loop. In such case, the evaporator section and the condenser section are formed in different areas of the loop.

The present invention can be applied in any gas turbine engine, including any turbofan engine or aero derivative turbine, and including helicopters powered with turbo shafts.

According to an embodiment, the heat transfer interface is configured such that the evaporator section of the at least one heat pipe is in direct contact with the air to be cooled. This way, heat transfer is effected in an effective manner.

For example, in an embodiment, air to be cooled flows through an airflow pipe having a pipe wall and a pipe interior, wherein the heat transfer interface is formed by an area of the airflow pipe in which the evaporator section of the at least one heat pipe extends through an opening in the pipe wall into the pipe interior. The evaporator section may be arranged perpendicular to the air flow in the airflow pipe. With such arrangement, the pressure drop in the airflow pipe caused by the interaction of the air to be cooled with the heat pipes is small.

In an embodiment, a plurality of heat pipes is provided, wherein the evaporator sections of the heat pipes each extend through an opening in the pipe wall and are circularly arranged in the pipe interior.

According to another embodiment, the heat transfer interface is configured such that the evaporator section of the at least one heat pipe is in indirect contact with the air to be cooled. Accordingly, the heat pipes cool a component that cools the air to be cooled. Such component, e.g., is the airflow pipe in which the air to be cooled flows. This embodiment is associated with the advantage that cooling of the air to be cooled can be effected without any pressure drop in the airflow pipe.

In an embodiment, air to be cooled flows through an airflow pipe having a pipe wall, wherein the heat transfer interface is formed by an area of the pipe wall which forms a housing in which the evaporator section of the at least one heat pipe is in thermal contact with the pipe wall such that the pipe wall is cooled by the at least one heat pipe.

In such embodiment, it may be provided that the evaporator section of the at least one heat pipe is aligned with the direction of the air flow and, accordingly, runs in the longitudinal direction of the airflow pipe and housing, thereby providing for an effective thermal contact between the evaporator section and the pipe wall.

In an exemplary embodiment, a plurality of heat pipes is provided, wherein the evaporator sections of the heat pipes each to run in the longitudinal direction of the airflow pipe and are arranged circumferentially spaced.

According to an embodiment, the housing of the airflow pipe comprises an inner pipe wall and an outer paper wall, wherein the evaporator section of the at least one heat pipe is arranged between the inner pipe wall and the outer pipe wall.

A heat pipe has a predetermined operating temperature range with a lower temperature limit for the temperature of the evaporator section. The lower temperature limit is dependent on the temperature and pressure at which the heat-transporting medium of the heat pipe evaporates at the evaporator interface and condenses at the condenser interface. Further factors such as capillary limitations, viscous limitations, sonic limitations, entrainment limitations and boiling limitations may influence the lower temperature limit and the operating temperature range as is well known to the skilled person.

According to an embodiment, it is provided that the at least one heat pipe is configured to have an operating temperature range such that the lower temperature limit of the heat pipe is reached by air from a compressor of the gas turbine engine during maximum takeoff thrust and maximum climb thrust of but is not reached during cruise thrust of an aircraft that comprises the gas turbine engine. Accordingly, the heat pipe and cooling system are working only during takeoff and climb of the aircraft but not at other flight conditions such as cruise. This provides for an effective cooling system as most of the cooling demand of a gas turbine engine occurs during takeoff and climb. During cruise, heat is not sent to the heat storage heat sink and heat can be released from the heat storage heat sink to the atmosphere.

In an embodiment, the lower temperature limit of the operating temperature range lies above the maximum temperature that is reached at the outlet of the high-pressure compressor during cruise. This temperature is also referred to T030 (max) at cruise and may be in the range between 700K and 800K. Accordingly, the heat pipe is not operative during cruise.

Heat pipes with an operating temperature range suitable for the present invention are well known. The operating temperature range of a heat pipe is particularly determined by the physical properties of the working fluid (the heat-transporting medium) and the pressure in the heat pipe. Alkali metals such as sodium and lithium may be used in embodiments.

According to a further embodiment, the at least one heat pipe is configured to shut down, i.e., to stop transfering heat, when the temperature of the heat sink reaches a predetermined temperature value. This prevents overheating of the heat sink. For example, if the heat sink is a fuel tank, the predetermined temperature value is just below the temperature at which the fuel in the fuel tank starts to cook. The shutdown may be achieved by choosing a corresponding operating temperature range that is left when the predetermined temperature level is reached. However, e.g., shutdown may also be achieved by means of a switch implemented in the heat pipe that interrupts the circulation of the working fluid.

According to a further embodiment, the at least one heat pipe is configured to shut down when the temperature of the cooling air is below a predetermined value (which, however, is above the lower temperature limit of the operating temperature range, as otherwise the heat pipe would not be operative anyway). When the temperature of the cooling air falls below the predetermined value, it is not necessary to further cool the cooling air and heating of the heat sink can be avoided.

In a further embodiment, the evaporator section of the heat pipe is provided with an extended surface in the form of fins or foams that are attached to the outside of the evaporator section. Also, the condenser section of the heat pipe is provided with an extended surface in the form of fins or foams that are attached to the outside of the evaporator section. The foams may be metal foams or graphite foams. In another embodiment, the extended surface of the condenser section is formed by a set of parallel plates. By extending the surface, the effectiveness of the heat transfer is increased.

In a further embodiment, a metal foam manufactured with 3D printing is integrated into the evaporator section and/or the condenser section of the heat pipe, wherein the metal foam is an integral part of the evaporator and/or condenser section of the heat pipe, respectively.

According to an embodiment, the heat sink is at least one fuel tank of an aircraft which comprises the cooling system.

However, the present invention is not limited to any particular form of heat sink. In other embodiments, the heat sink is formed by ram air from outside a gas turbine engine which comprises the cooling system, by air received from the fan or a lower stage compressor of such gas turbine engine, the skin of an airframe which is in contact with external air, and/or an expandable heat sink. In the latter case, a cryogenic liquid may be used as heat sink. In such case, liquefied gases are kept in their liquid state at very low temperature.

In the context of the present disclosure a heat sink is any medium that absorbs thermal energy and eventually dissipates such energy. A heat sink in the sense of the present disclosure may also be simply colder air such as ram air or fan air that passes the condenser section of the heat pipe.

According to a further aspect of the invention, an aircraft comprising a gas turbine engine with a cooling system in accordance with claim 1 is provided, wherein
- the gas turbine engine comprises a nacelle, a fan, an engine core and a bypass duct,
- air to be cooled is extracted from a compressor of the engine core,
- the heat sink is a fuel tank located in or under a wing or in the fuselage of the aircraft, and
- the at least one heat pipe extends from the heat transfer interface to the nacelle and from the nacelle through an engine mount to the fuel tank.

This aspect of the invention, accordingly, regards an aircraft having a fuel tank which is used as heat sink for the condenser section of at least one heat pipe, wherein the evaporator section of the at least one heat pipe is coupled to cooling air from a compressor of the engine core.

According to a still further aspect of the invention, a method for cooling air of a secondary air system of a gas turbine engine of an aircraft is provided. The method comprises:
- providing bleed air from a compressor of the gas turbine engine as air to be cooled,
- cooling the air to be cooled during maximum takeoff thrust and maximum climb thrust of the gas turbine engine only, wherein
- the air is cooled by means of at least one heat pipe, the heat pipe having an evaporator section and a condenser section, and having an operating temperature range with a lower temperature limit for the temperature of the evaporator section,
- air is cooled by the evaporator section of the at least one heat pipe, and
- the at least one heat pipe is configured to have an operating temperature range such that the lower temperature limit of the heat pipe is reached by air from the compressor during maximum takeoff thrust and maximum climb thrust of the gas turbine engine only, and
- dissipating heat from the condenser section of the at least one heat pipe during maximum takeoff thrust and maximum climb thrust of the gas turbine engine.

The method provides for cooling of air to be cooled during takeoff and climb only, wherein the operating temperature range of at least one heat pipe is chosen such that the heat pipe is operative at the temperatures of the bleed air of the compressor that are reached during takeoff and climb only. The compressor may be a high-pressure compressor.

In an embodiment of the method, the dissipating step comprises heating a heat sink of the aircraft during maximum takeoff thrust and maximum climb thrust of the gas turbine engine, wherein the heat sink absorbs heat generated at the condenser section of the heat pipe, and dissipating heat from the heat sink during cruise of the aircraft. The heat sink typically has sufficient heat capacity to absorb heat provided by the condenser section of the at least one heat pipe during the relatively short time of takeoff and climb. Subsequently, during cruise, the heat accumulated in the heat sink can be dissipated to atmosphere. In particular, the heat sink may be at least one fuel tank of the aircraft and the heat is released from the fuel tank to the atmosphere during cruise.

According to a further embodiment, the at least one heat pipe is shut down when the temperature of heat sink is above a predetermined value to avoid overheating of the heat sink material such as fuel.

It should be noted that the present invention is described in terms of a cylindrical coordinate system having the coordinates x, r and ϕ. Here x indicates the axial direction, r the radial direction and ϕ the angle in the circumferential direction. The axial direction is defined by the machine axis of the gas turbine engine, with the axial direction pointing from the engine inlet to the engine outlet. Starting from the x-axis, the radial direction points radially outwards. Terms such as "in front of" and "behind" refer to the axial direction or flow direction in the engine. Terms such as "outer" or "inner" refer to the radial direction.

The invention will be explained in more detail on the basis of exemplary embodiments with reference to the accompanying drawings in which:
- Fig. 1: is a simplified schematic sectional view of a gas turbine engine in which the present invention can be realized;
- Fig. 2: is a schematic view of a gas turbine engine having a cooling system which comprises a plurality of heat pipes which extend between a fuel tank of an aircraft and a heat transfer interface of the gas turbine engine, wherein cooling air of a secondary air system is cooled by the evaporator ends of the heat pipes;
- Fig. 3: is a diagram showing the outlet temperature of a high-pressure compressor for different flight conditions both for maximum takeoff thrust and maximum cruise thrust of a gas turbine engine;
- Fig. 4: is a schematic sectional view of a heat pipe;
- Fig. 5: shows an embodiment of a heat transfer interface in which the evaporator sections of a plurality of heat pipes are thermally coupled to an air flow in that they extend into the air flow in a perpendicular direction by extending through holes in an airflow pipe wall;
- Fig. 6: is an enlarged cross-sectional view of the airflow pipe and the evaporator sections of Fig. 5;
- Fig. 7: is a cross-sectional view similar to Fig. 6, wherein the evaporator sections of the heat pipes are provided with an extended surface;
- Fig. 8: shows a further embodiment of a heat transfer interface in which the evaporator sections of a plurality of heat pipes are thermally coupled to a housing of an airflow pipe;
- Fig. 9: is an enlarged cross-sectional view of the airflow pipe and the evaporator sections of Fig. 8, wherein the evaporator sections of the heat pipes run in the longitudinal direction in the pipe housing;
- Fig. 10: is a cross-sectional view similar to Fig. 9, wherein the evaporator sections of the heat pipes are provided with an extended surface;
- Fig. 11: shows schematically a heat pipe design in which metal foams manufactured with 3D printing are integral to the evaporator section and the condenser section of the heat pipe;
- Fig. 12: shows schematically a heat pipe design in which metal foams manufactured with 3D printing are integral to the evaporator section of the heat pipe, were in the condenser section of the heat pipe is provided with a plurality of pipe fins formed by parallel plates; and
- Fig. 13: shows schematically the components of a loop heat pipe.

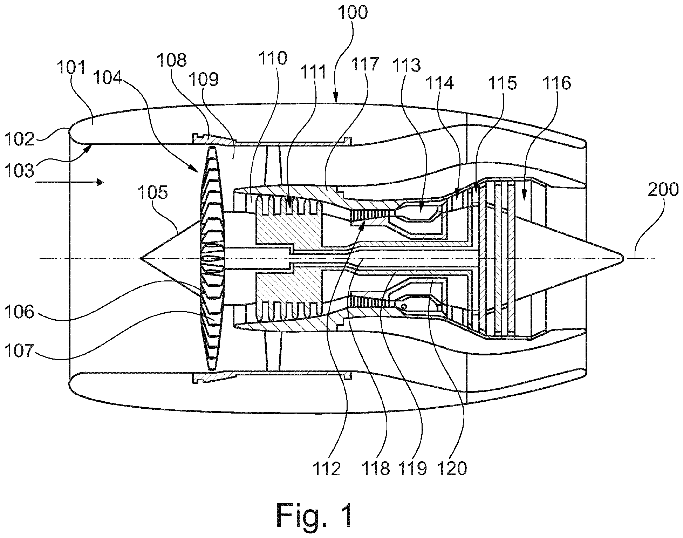

FIG. 1 shows, in a schematic manner, a turbofan engine 100 that has a fan stage with a fan 104 as the low-pressure compressor, a medium-pressure compressor 111, a high-pressure compressor 112, a combustion chamber 113, a high-pressure turbine 114, a medium-pressure turbine 115, and a low-pressure turbine 116.

The medium-pressure compressor 111 and the high-pressure compressor 112 respectively have a plurality of compressor stages that respectively comprise a rotor stage and a stator stage. The turbofan engine 100 of FIG. 1 further has three separate shafts, a low-pressure shaft 118 that connects the low-pressure turbine 116 the fan 104, a medium-pressure shaft 119 that connects the medium-pressure turbine 115 to the medium-pressure compressor 111, and a high-pressure shaft 120 that connects the high-pressure turbine 114 to the high-pressure compressor 112. However, this is to be understood to be merely an example. If, for example, the turbofan engine has no medium-pressure compressor and no medium-pressure turbine, only a low-pressure shaft and a high-pressure shaft would be present.

The turbofan engine 100 has an engine nacelle 101 that comprises an inlet lip 102 and forms an engine inlet 103 at the inner side, supplying inflowing air to the fan 104. The fan 104 has a plurality of fan blades 107 that are connected to a fan disc 106. The annulus of the fan disc 106 forms the radially inner boundary of the flow path through the fan 104. Radially outside, the flow path is delimited by the fan housing 108. Upstream of the fan-disc 106, a nose cone 105 is arranged.

Behind the fan 104, the turbofan engine 100 forms a secondary flow channel 109 and a primary flow channel 110. The primary flow channel 110 leads through the core engine (gas turbine) that comprises the medium-pressure compressor 111, the high-pressure compressor 112, the combustion chamber 113, the high-pressure turbine 114, the medium-pressure turbine 115, and the low-pressure turbine 116. At that, the medium-pressure compressor 111 and the high-pressure compressor 112 are surrounded by a circumferential housing 117 which forms an annulus surface at the internal side, delimitating the primary flow channel 110 radially outside.

During operation of the turbofan engine 100, a primary flow flows through the primary flow channel 110, which is also referred to as the main flow channel, and a secondary flow flows through the secondary flow channel 109, which is also referred to as bypass channel or bypass duct, wherein the secondary flow bypasses the core engine.

The described components have a common rotational or machine axis 200. The rotational axis 200 defines an axial direction of the turbofan engine. A radial direction of the turbofan engine extends perpendicularly to the axial direction.

In the context of the present invention air of a secondary air system of the gas turbine engine and cooling of such air is considered. A secondary air system is an air system which directs cooling air to components to be cooled. The cooling air may be bleed air from a compressor of the gas turbine engine. In particular, air of the high-pressure compressor of the engine is used to cool the high-pressure turbine of the engine which experiences the highest temperatures within the engine. Alternatively, e.g., the cooling air could come from the medium-pressure compressor and be used to cool a medium pressure turbine.

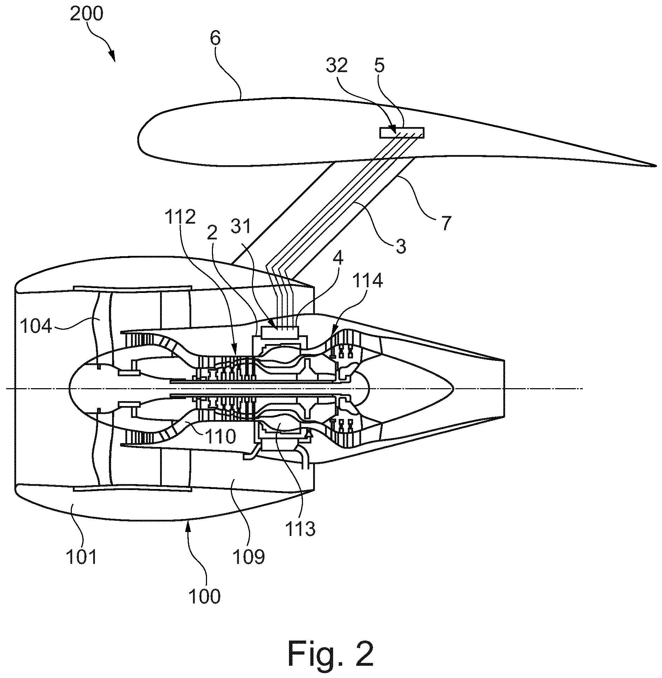

Fig. 2 shows schematically a gas turbine engine 100 similar to that of Fig. 1 which additionally implements a cooling system. The gas turbine engine 100 is part of an aircraft 200 of which only a wing 6, an engine mount 7 and the gas turbine engine 100 are shown.

The cooling system comprises a plurality of heat pipes 3. Each heat pipe 3 has one end which forms an evaporator section 31 and an opposing end which forms a condenser section 32. The condenser sections 32 of the heat pipes 3 are thermally coupled to a heat sink 5 which is formed by a fuel tank located in the wing 6 of the aircraft 200.

The evaporator sections 31 of the heat pipes 3 are thermally coupled with air to be cooled. The air to be cooled is bleed air from the high-pressure compressor 112 of the gas turbine engine 100 which flows through airflow pipes 2 to the high-pressure turbine 114 for cooling of the high-pressure turbine 114. The airflow pipes 2 bypass the combustion chamber 113. The airflow pipes 2 are part of a secondary air system of the gas turbine engine 100.

To cool the cooling air flowing in an airflow pipe 2, the air flowing in airflow pipe 2 transfers heat to the evaporator sections 31 of the heat pipes 3. This heat transfer is provided for in a heat transfer interface 4 in which the evaporator sections 31 of the heat pipes 3 are thermally coupled with the air flowing in airflow pipe 2.

The heat pipes 3 extend from the heat transfer interface 4 through the bypass channel 109 to the nacelle 101 and from the nacelle 101 through the engine mount 7 to the fuel tank 5. The heat pipes 3 may be guided through the bypass channel 109 by means of non-structural struts also referred to as services splitter fairings (not shown), thereby avoiding aerodynamic drag to the air flowing in the bypass channel. In in military aircrafts, the fuel tanks may be in pods under the wings.

In operation, air in the airflow pipe 2 is cooled by the evaporator sections 31 of the heat pipes 3. At the same time, fuel in the fuel tank 5 is heated by the condenser sections 32 of the heat pipes 3. The cooling system, accordingly, transfers heat from the secondary air system to the fuel tank 5 by means of heat pipes 3.

The heat pipes 3 are configured such that they operate in a temperature range which is reached by the high-pressure compressor bleed air during takeoff and climb only but which is not reached during cruise of the aircraft 200. Accordingly, heat transfer from the secondary air system to the fuel tank 5 takes place during takeoff and climb only. During cruise, such heat transfer is not taking place. However, during cruise heat in the fuel tanks 5 received during takeoff and climb is dissipated by forced convection from the external surface of the wing 6 to the external cold atmospheric air.

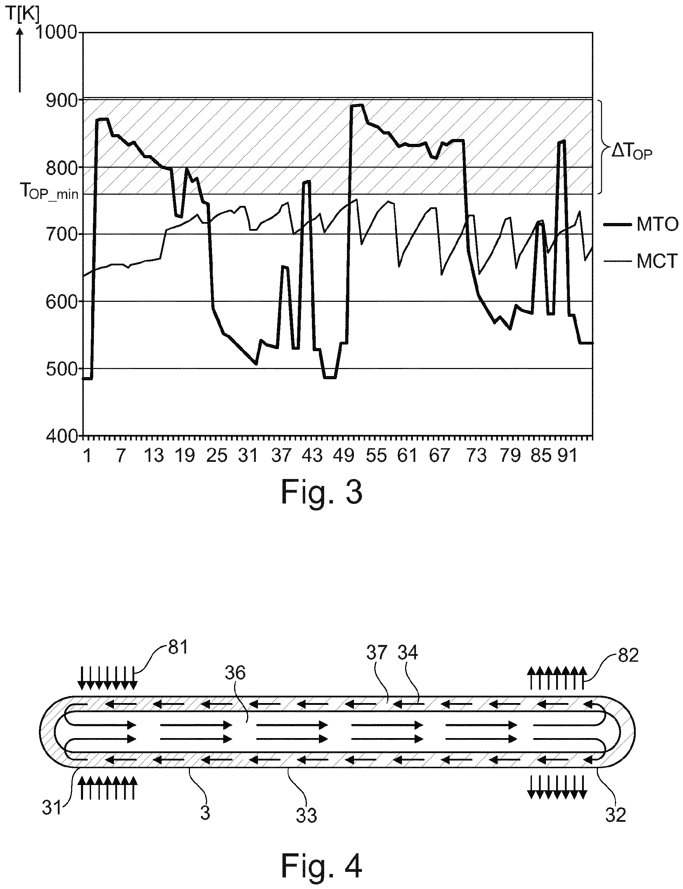

The operating temperature range of the heat pipes 3 is further discussed with respect to Fig. 3 which is a diagram showing the temperature T of bleed air taken from the high-pressure compressor depending on different flight conditions numbered between 1 and 94 on the x-axis. The temperature is shown both for maximum takeoff thrust (MTO) and maximum cruise thrust (MCT). The temperature range ΔTₒₚ in which the heat pipe 3 is operative to transfer heat is indicated in Fig. 3 and extends in the shown embodiment from a temperature above 760 K to 1000 K. The lower temperature limit of the temperature range ΔTₒₚ is indicated as T_{op_min}. The lower temperature limit T_{op_min} defines the temperature that has to be present at the evaporator section of the heat pipe in order for the heat pipe to start operating.

The temperature range ΔTₒₚ and the lower temperature limit T_{op_min} are set in particular by choosing an appropriate working fluid of the heat pipe 3 and an appropriate pressure inside the heat pipe 3. In order for the heat pipe 3 to transfer heat, the working fluid in the heat pipe 3 must be heated sufficiently by air to be cooled such that the working fluid in the evaporator section of the heat pipe evaporates.

Fig. 3 shows that the outlet temperature of the high-pressure compressor does not reach the operating temperature range ΔTₒₚ during cruise but stays below the lower temperature limit T_{op_min}. On the other hand, the outlet temperature of the high-pressure compressor reaches the operating temperature range ΔTₒₚ in a plurality of flight conditions during takeoff.

Regarding the temperature of the fuel tank 5 which represents the heat sink for the condenser section of the heat pipe, the temperature must stay below the temperature at which the fuel in the fuel tank 5 starts to cook. A monitoring system may be implemented to watch the temperature of the fuel. If the temperature reaches a predetermined value, the cooling system is shut down. Such shutdown may be implemented, e.g., by providing switches which interrupt the circulation of the working fluid in the heat pipe. Such switch could be an actuator that modifies the internal working pressure of the heat pipe and, therefore, the evaporator temperature range.

Fig. 4 depicts a standard heat pipe 3 for shortly discussing the general structure and function of a heat pipe 3. The heat pipe 3 comprises a vacuum-tight containment 33 in which a working fluid 34 experiences phase changes between liquid phase and vapor phase. A heat input 81 vaporizes the working fluid 34 in liquid form in the evaporator section 31. Vapor and its associated latent heat flow through a central channel 36 towards the colder condenser section 32 in which the vapor condenses, thereby giving up its latent heat as heat output 82. Capillary action moves the condensed liquid back to evaporator section 31 through a wick structure 37. Between the evaporator section 31 and the condenser section 32 of the heat pipe 3 extends a quasi adiabatic section.

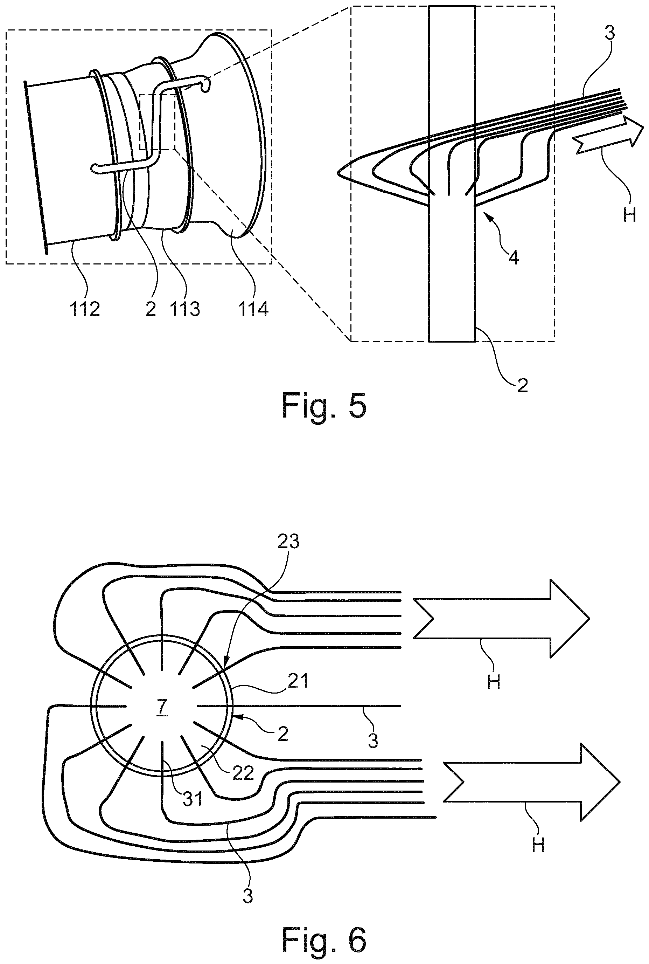

Fig. 5 shows an embodiment of the heat transfer interface 4 in which the evaporator sections 31 of the heat pipes 3 are thermally coupled with air 7 flowing in the airflow pipe 2. The left hand side of Fig. 5 depicts in a schematic manner the high-pressure compressor 112, the combustion chamber 113, the high-pressure turbine 114 and an airflow pipe 2 providing cooling air from the high-pressure compressor 112 to the high-pressure turbine 114.

According to the right hand side of Fig. 5 and the cross-sectional view of Fig. 6, the airflow pipe 2 comprises a pipe wall 21 and a pipe interior 22. In the pipe interior 22, air 7 to be cooled flows in the longitudinal direction of the airflow pipe 2. The pipe wall 21 comprises openings 23 through which the evaporator sections 31 of a plurality of heat pipes 3 extend such that they stick into the interior 22 of the airflow pipe 2. The evaporator sections 31, accordingly, are in direct contact with the air 7 to be cooled. The evaporator sections 31 are arranged perpendicularly to the direction of the air flow in pipe 2. Further, the plurality of heat pipes 3 are circumferentially spaced and form a circular pattern.

The heat pipes 3 transfer the heat input by the air 7 to be cooled to the condenser section 32 as is shown schematically by arrows H.

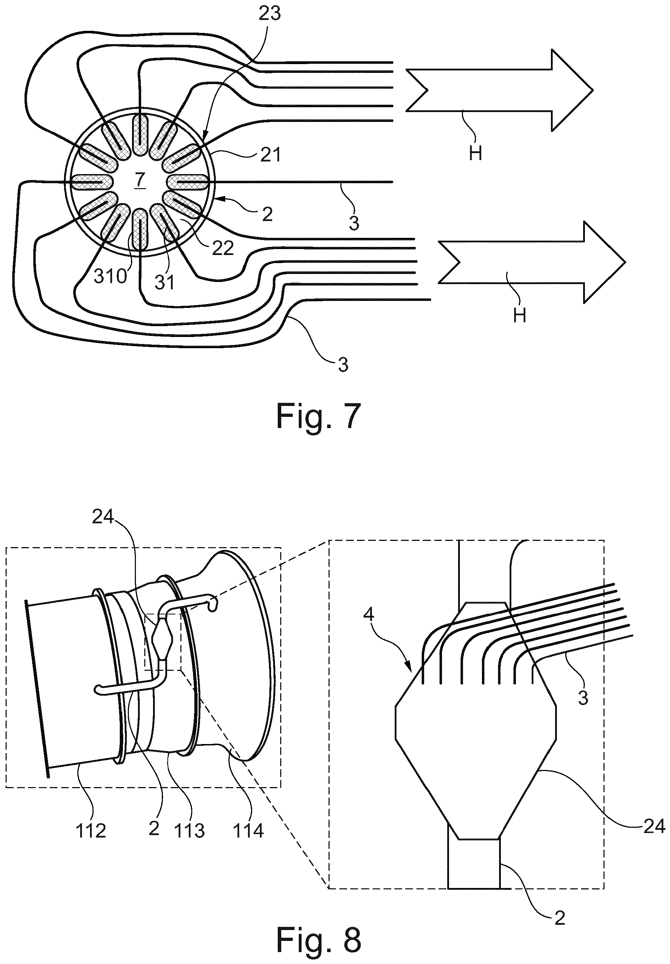

Fig. 7 shows a variation of the embodiment of Figs. 5 and 6 in which the evaporator sections 31 of the heat pipes 3 have an extended surface 310 depicted schematically which may be in the form of fins, metal foams or graphite foams. By means of the extended surface 310 heat transfer from air 7 to be cooled to the evaporator sections 31 of the heat pipes 3 is enhanced.

Fig. 8 shows a further embodiment of the heat transfer interface 4 in which the evaporator sections 31 of the heat pipes 3 are thermally coupled with air 7 flowing in the airflow pipe 2. The left hand side of Fig. 8 depicts - similar as Fig. 5 - in a schematic manner the high-pressure compressor 112, the combustion chamber 113, the high-pressure turbine 114 and an airflow pipe 2 providing cooling air from the high-pressure compressor 112 to the high-pressure turbine 114. In this embodiment, an area of the airflow pipe 2 forms a housing 24 in which the evaporator sections 31 of the heat pipes 3 are in thermal contact with the airflow pipe 2.

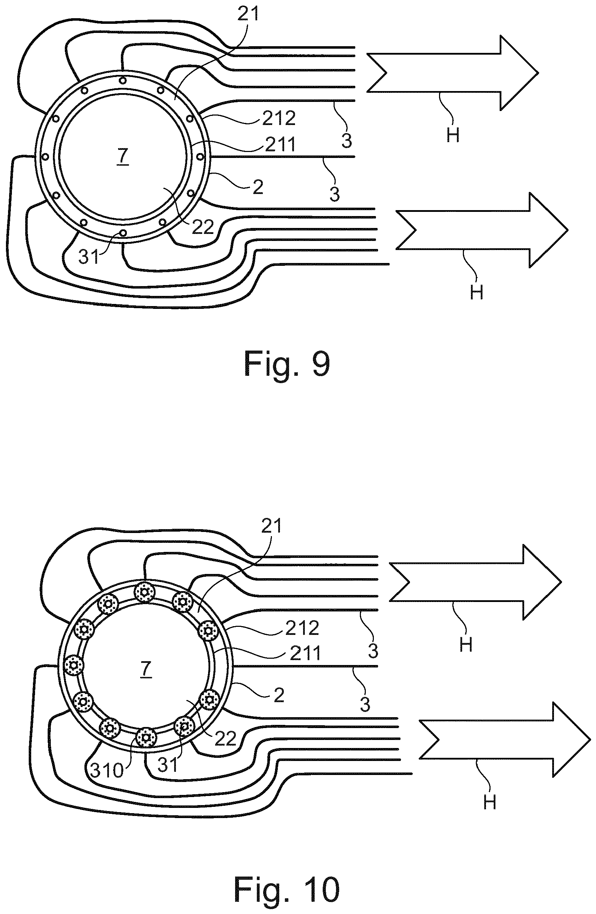

More particularly, according to the right hand side of Fig. 8 and the cross-sectional view of Fig. 9, the airflow pipe 2 has a pipe wall 21 which is formed by an inner pipe wall 211 and an outer pipe wall 212. The evaporator sections 31 of the heat pipes 3 are arranged between the inner pipe wall 211 and the outer pipe wall 212. They are arranged in the longitudinal direction of the airflow pipe 2 and, accordingly, run parallel to the air flow in pipe 2. The evaporator sections 31, in this embodiment, indirectly cool the air 7 to be cooled in that they cool the pipe wall 21.

Fig. 10 shows a variation of the embodiment of Figs. 8 and 9 in which the evaporator sections 31 of the heat pipes 3 have an extended surface 310 depicted schematically which may be in the form of fins, metal foams or graphite foams. By means of the extended surface 310 heat transfer from pipe wall 21 to the evaporator sections 31 of the heat pipes 3 is enhanced, thereby also enhancing heat transfer air from the air 7 to be cooled to the heat pipes 3.

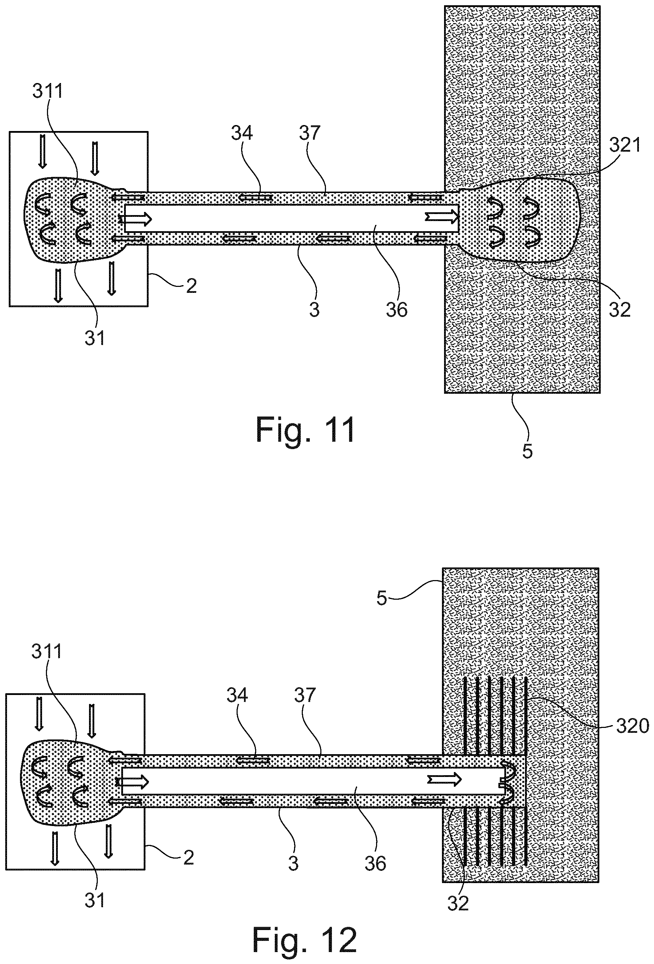

Fig. 11 shows an embodiment of a heat pipe 3 in which a metal foam 311 is integrated into the evaporator section 31. In a similar manner, a metal foam 321 is integrated into the condenser section 32. The metal foam 311, 312 is manufactured with 3D printing and integral to the evaporator 31 and condenser 32, respectively. This avoids thermal bridges in the welds between the metal foam 311, 312 and the evaporator 31 or condenser 32 of the heat pipe 3. By integrating the 3D printed metal forms 311, 321 the design of the heat pipe 3 becomes a single part. As described with respect to Fig. 4, liquid 34 flows from the condenser section 32 along the wick structure 37 to the evaporator section 31 by capillary action. After evaporation in evaporator section 31, the heat pipe working fluid flows as vapor through the center 36 of the heat pipe 3 to the condenser section 32. The condenser section 32 is immersed in the fuel of fuel tank 15.

Fig. 12 shows a variation of the embodiment of Fig. 11 in which a 3D printed metal foam 311 is provided at the evaporator section 31 of the heat pipe 3 only. In the condenser section 32, there is no requirement similar to that of minimizing the pressure drop of the air 7 flowing in airflow pipe 2 at the evaporator section 31. The fuel in the fuel tank 15 is initially stagnant and will move only due to the thermal gradients that develop through the heating by the evaporator section 31. Therefore, the design can be less complex. Fig. 12 shows a simplified design in which a set of parallel plates 320 are immersed in the fuel and provide for an extended surface of the condenser section 32. Alternatively, fins or metal foams or carbon foams may be used to create an extended surface of the condenser section 32.

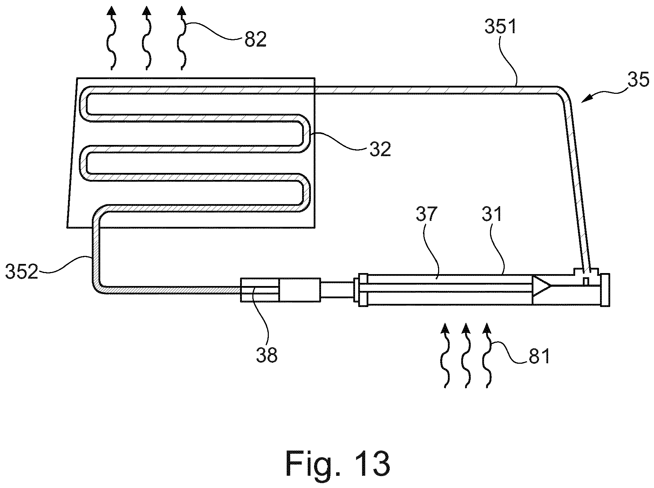

The present disclosure is not limited to any particular kind of heat pipes. Fig. 13 shows that, in an embodiment, the heat pipes may be in the form of loop heat pipes 35. Fig. 13 depicts a loop heat pipe 35 having an evaporator section 31 and a condenser section 32. A separate vapor line 351 leads from the evaporator section 31 to the condenser section 32 and a separate liquid line 352 leads from the condenser section 32 to the evaporator section 31. The evaporator section 31 comprises a wick structure 37 and may also have a reservoir 38 for the liquid working fluid. The use of a loop heat pipe 35 may be preferable in case of a large distance between the evaporator section and the condenser section of the heat pipe 2.

The cooling system as described with respect to the embodiments of Figs. 2 to 13 provides bleed air from a compressor of the gas turbine engine as air to be cooled. The air is cooled during maximum takeoff thrust and maximum climb thrust of the gas turbine engine only. To achieve this, heat pipes 3 are provided which have an operating temperature range such that the lower temperature limit of the heat pipe is reached by air from the compressor during maximum takeoff thrust and maximum climb thrust of the gas turbine engine only. During operation of the heat pipes, air is cooled by the evaporator section. The condenser section transfers heat to the heat sink during maximum takeoff thrust and maximum climb thrust. The heat is dissipated from the heat sink to the atmosphere during cruise of the aircraft.

It should be understood that a fuel tank is only an example of a heat sink. While a fuel tank used as a heat sink has the unique property of being able to store fuel, especially during takeoff and climb when fuel tanks are at maximum capacity, it must be understood that the condenser of the heat pipes can be thermally linked to any heat sink present in the aircraft or propulsion system, for instance but not limited, any of the walls of the internal or externals walls of the engine nacelle in contact with cold air as the fan duct, splitter fairings, core fairings, nacelle inlet lip (coupled with the nacelle anti ice system). Heat sinks could also be tail control surfaces, pylon external surfaces, fuselage external surfaces, wing external surfaces. Further, the heat sink could be also the tail, wing or nacelle inlet in such a way that the heat transported by the heat pipes could be used as an anti-ice system.

It should be understood that the above description is intended for illustrative purposes only, and is not intended to limit the scope of the present disclosure in any way. Also, those skilled in the art will appreciate that other aspects of the disclosure can be obtained from a study of the drawings, the disclosure and the appended claims. All methods described herein can be performed in any suitable order unless otherwise indicated herein or otherwise clearly contradicted by context. Various features of the various embodiments disclosed herein can be combined in different combinations to create new embodiments within the scope of the present disclosure. In particular, the disclosure extends to and includes all combinations and sub-combinations of one or more features described herein. Any ranges given herein include any and all specific values within the range and any and all sub-ranges within the given range.

## Claims

1. A cooling system for cooling air (7) of a secondary air system of a gas turbine engine (100), the system comprising:
- at least one heat pipe (3), the heat pipe (3) having an evaporator section (31) and a condenser section (32),
- a heat transfer interface (4) in which the evaporator section (31) of the at least one heat pipe (3) is thermally coupled with air (7) to be cooled, and
- a heat sink (5) to which the condenser section (32) of the at least one heat pipe (3) is thermally coupled.

2. The cooling system of claim 1, **characterized in that** the heat transfer interface (4) is configured such that the evaporator section (31) of the at least one heat pipe (3) is in direct contact with the air (7) to be cooled.

3. The cooling system of claim 1 or 2, **characterized in that** the air (7) to be cooled flows through an airflow pipe (2) having a pipe wall (21) and a pipe interior (22), wherein the heat transfer interface (4) is formed by an area of the airflow pipe (2) in which the evaporator section (31) of the at least one heat pipe (3) extends through an opening (23) in the pipe wall (21) into the pipe interior (22).

4. The cooling system of claim 1, **characterized in that** the heat transfer interface (4) is configured such that the evaporator section (31) of the at least one heat pipe (3) is in indirect contact with the air (7) to be cooled.

5. The cooling system of claim 1 or 4, **characterized in that** the air (7) to be cooled flows through an airflow pipe (2) having a pipe wall (21), wherein the heat transfer interface (4) is formed by an area of the pipe wall (21) which forms a housing (24) in which the evaporator section (31) of the at least one heat pipe (3) is in thermal contact with the pipe wall (21).

6. The cooling system of claim 5, **characterized in that** the evaporator section (31) of the at least one heat pipe (3) runs in the longitudinal direction of the airflow pipe (2).

7. The cooling system of claim 5 or 6, **characterized in that** the housing (24) of the airflow pipe (2) comprises an inner pipe wall (211) and an outer pipe wall (212), wherein the evaporator section (31) of the at least one heat pipe (3) is arranged between the inner pipe wall (211) and the outer pipe wall (212).

8. The cooling system of any of the preceding claims, **characterized in that** the at least one heat pipe (3) has a predetermined operating temperature range (ΔTₒₚ) with a lower temperature limit (T_{op_min}) for the temperature of the evaporator section (31), wherein the at least one heat pipe (3) is configured to have an operating temperature range (ΔTₒₚ) such that the lower temperature limit (T_{op_min}) of the heat pipe (3) is reached by air from a compressor (112) of the gas turbine engine (100) during maximum takeoff thrust and maximum climb thrust but is not reached during cruise thrust of an aircraft (200) that comprises the gas turbine engine (100).

9. The cooling system of any of the preceding claims, **characterized in that** the at least one heat pipe (3) is configured to shut down when the temperature of heat sink (5) reaches a predetermined value.

10. The cooling system of any of the preceding claims, **characterized in that** a metal foam (311, 321) manufactured with 3D printing is integrated into the evaporator section (31) and/or the condenser section (32) of the heat pipe, wherein the metal foam (311, 321) is an integral part of the evaporator section (31) and/or condenser section (32) of the heat pipe (3), respectively.

11. The cooling system of any of the preceding claims, **characterized in that** the heat sink (5) is at least one fuel tank of an aircraft (200) which comprises the cooling system.

12. An aircraft (200) comprising a gas turbine engine (100) with a cooling system in accordance with claim 1, wherein
- the gas turbine engine (100) comprises a nacelle (101), a fan (104), an engine core and a bypass duct (109),
- air (7) to be cooled is extracted from a compressor (112) of the engine core,
- the heat sink (5) is a fuel tank located in or under a wing (6) or in the fuselage of the aircraft (200),
- the at least one heat pipe (3) extends from the heat transfer interface (4) to the nacelle (101) and from the nacelle (101) through an engine mount (7) to the fuel tank (5).

13. A method for cooling air (7) of a secondary air system of a gas turbine engine (100) of an aircraft (200), the method comprising:
- providing bleed air from a compressor (112) of the gas turbine engine (100) as air (7) to be cooled,
- cooling the air (7) to be cooled during maximum takeoff thrust and maximum climb thrust of the gas turbine engine (100) only, wherein:
∘ the air is cooled by means of at least one heat pipe (3), the heat pipe (3) having an evaporator section (31) and a condenser section (32), and having an operating temperature range (ΔTₒₚ) with a lower temperature limit (T_{op_min}) for the temperature of the evaporator section (31),
∘ air is cooled by the evaporator section (31) of the at least one heat pipe (3),
∘ the at least one heat pipe (3) is configured to have an operating temperature range (ΔTₒₚ) such that the lower temperature limit (T_{op_min}) of the heat pipe (3) is reached by air from the compressor (112) during maximum takeoff thrust and maximum climb thrust of the gas turbine engine (100) only,
- dissipating heat from the condenser section (32) of the at least one heat pipe (3) during maximum takeoff thrust and maximum climb thrust of the gas turbine engine (100).

14. The method of claim 13, **characterized in that** the dissipating step comprises:
- heating a heat sink (5) of the aircraft (200) during maximum takeoff thrust and maximum climb thrust of the gas turbine engine (100), wherein the heat sink (5) absorbs heat generated at the condenser section (32) of the heat pipe (3); and
- dissipating heat from the heat sink (3) during cruise of the aircraft (200).

15. The method of claim 13 or 14, **characterized in that** the at least one heat pipe (3) is shut down when the temperature of heat sink (5) is above a predetermined value.
